# EUROPÄISCHE PATENTSCHRIFT

(11) **EP 3 752 674 B1**
(45) Veröffentlichungstag und Bekanntmachung des Hinweises auf die Patenterteilung: **16.02.2022**
(21) Anmeldenummer: 19704706.1
(22) Anmeldetag: 17.01.2019
(51) Int. Cl.: E01B 3/46

(54) **SCHWELLENSOHLE**
UNDER SLEEPER PAD
SEMELLE DE TRAVERSE

(30) Priorität: 14.02.2018 AT 382018
(43) Veröffentlichungstag der Anmeldung: 23.12.2020
(73) Patentinhaber: Getzner Werkstoffe Holding GmbH, 6706 Bürs (AT)
(72) Erfinder: AUGUSTIN, Andreas, 6714 Nüziders (AT)
(74) Vertreter: Fechner, Thomas
(86) Internationale Anmeldenummer: PCT/AT2019/000001
(87) Internationale Veröffentlichungsnummer: WO 2019/157540

(56) Entgegenhaltungen:
- EP-A1- 0 795 645
- WO-A1-2011/151389
- WO-A1-2014/110608

## Beschreibung

Die vorliegende Erfindung betrifft eine Schwellensohle zur Befestigung an einer den Schienen gegenüberliegenden Unterseite einer Gleisschwelle, wobei die Schwellensohle zumindest eine elastische Schicht mit darin verteilt angeordneten Korkkörnern eines Korkgranulats aufweist.

Schwellensohlen werden zur Schwingungsdämpfung und Schotterschonung an den Unterseiten von, die Schienen tragenden, Gleisschwellen angeordnet bzw. befestigt.

Diese Gleisschwellen bestehen heutzutage häufig aus Beton. Zur Schwingungsdämpfung weisen Schwellensohlen zumindest eine elastische Schicht auf. Beim Stand der Technik sind verschiedenste Materialien und Materialmischungen bekannt, um diese elastische Schicht auszubilden. Unter anderem ist es Stand der Technik Korkkörner in Form eines Korkgranulates für die Ausbildung der elastischen Schicht der Schwellensohle zu verwenden. Hierfür werden in der Regel aus der Korkverarbeitung entstehende Abfälle verwendet. EP-A-795645 zeigt eine gattungsgemäße Schwellensohle, eine elastische Schicht mit darin verteilt angeordneten Korkkörnern sowie ein Elastomer.

Aufgabe der Erfindung ist es, gattungsgemäße Schwellensohlen, bei denen die elastische Schicht Korkkörner eines Korkgranulates aufweist, in ihren Eigenschaften, insbesondere zur Schwingungsdämpfung, zu verbessern.

Hierfür sieht die Erfindung eine Schwellensohle gemäß Patentanspruch 1 vor.

Die Erfindung berücksichtigt, dass die Korkkörner des Korkgranulates eine relativ hohe Steifigkeit bzw. Plastizität aufweisen und somit in der elastischen Schicht im Wesentlichen die tragende Funktion übernehmen. Um zusätzlich aber auch die für die Schwingungsdämpfung benötigte Elastizität zu verbessern, kommt gemäß der Erfindung zusätzlich zumindest ein zelliges synthetisches Elastomer zum Einsatz, welches bevorzugt zwischen den Korkkörnern angeordnet ist, um so die elastischen Eigenschaften der elastischen Schicht für die Anwendung in einer Schwellensohle zu optimieren. Hierdurch kann eine Schwellensohle zur Verfügung gestellt werden, welche einerseits für diesen speziellen Einsatz der Schwingungsdämpfung unter Gleisschwellen optimierte elastische Eigenschaften und damit eine sehr gute Schwingungsdämpfung aufweist und andererseits aber auch die nötige Stabilität bereitstellt und zusätzlich auch noch kostengünstig hergestellt werden kann, da als Korkkörner des Korkgranulates Abfallprodukte aus einer sonstigen Verarbeitung von Kork verwendet werden können. Zusätzlich wird mit erfindungsgemäßen Schwellensohlen auch eine gute Schotterschonung erreicht.

Die elastische Schicht der erfindungsgemäßen Schwellensohle besteht somit aus einer Mischung aus einem natürlichen Material in Form der Korkkörner mit einem künstlich bzw. synthetisch hergestellten Material in Form des zumindest einen zelligen synthetischen Elastomers. Das Wort zellig bedeutet dabei, dass es sich bei dem synthetischen Elastomer um einen Körper mit Gas- bzw. Lufteinschlüssen handelt. Man könnte auch von einem Schaum oder einem geschäumten Material sprechen. Das Wort synthetisch bedeutet, dass das Elastomer künstlich hergestellt, also ein Kunststoff und kein reines Naturprodukt ist. Ein Elastomer ist ein formfester aber elastisch verformbarer Werkstoff, welcher sich bei Zug- und/oder Druckbelastung elastisch verformen lässt und dann nach Beendigung der Belastung aber zumindest weitgehend wieder in seine ursprüngliche umverformte Gestalt zurückfindet. Man könnte das zellige synthetische Elastomer also auch als porösen bzw. Gas- und/oder Lufteinschlüsse aufweisenden elastischen Kunststoff bezeichnen. Da die elastische Schicht auch plastische Eigenschaften aufweist, könnte man sie auch als elasto/plastische Schicht bezeichnen.

Besonders bevorzugte Varianten der Erfindung sehen vor, dass das zellige synthetische Elastomer als Feststoff des Elastomers Polyurethan aufweist oder daraus besteht. In diesem Fall könnte man also auch von einem zelligen Polyurethan sprechen. Alternativ kann es sich bei dem Feststoff des zelligen synthetischen Elastomers aber auch um Styrol-Butadien-Kautschuk oder Ethylen-Vinylacetat-Copolymer oder Ethylen-Propylen-Dien-Kautschuk oder Chloropren-Kautschuk oder Silikon oder Polyisopren handeln. Auch Mischungen dieser Elastomere sind möglich, um das zellige synthetische Elastomer der elastischen Schicht auszubilden.

Die Korkkörner des Korkgranulates und das zumindest eine zellige synthetische Elastomer sind günstigerweise mehr oder weniger gleich verteilt und/oder als heterogene Mischung in der elastischen Schicht angeordnet. Sowohl die Korkkörner als auch das zellige synthetische Elastomer können in der Regel mit dem bloßen Auge wahrgenommen werden. Man könnte auch von einem Konglomerat oder von einer Mischung mit diesen beiden Substanzen sprechen.

In einer ersten Ausgestaltungsform sind die in der elastischen Schicht verteilt angeordneten Korkkörner des Korkgranulates in einer Matrix aus dem zelligen synthetischen Elastomer eingebettet. In anderen Worten kann somit also vorgesehen sein, dass das zellige synthetische Elastomer in der elastischen Schicht eine Matrix, oder in anderen Worten ein Grundgerüst, bildet, in die bzw. das die verteilt angeordneten Korkkörner des Korkgranulats eingebettet sind, wobei das zellige synthetische Elastomer die Korkkörner miteinander verbindet.

Alternativen können vorsehen, dass auch das zumindest eine zellige synthetische Elastomer in der elastischen Schicht als verteilt angeordnete Körner ausgebildet ist. Diese Körner aus dem zelligen synthetischen Elastomer und die Körner des Korkgranulates können dann mittels zumindest eines Bindemittels miteinander verbunden sein. Es kann somit vorgesehen sein, dass das zellige synthetische Elastomer in der elastischen Schicht als verteilt angeordnete Körner aus dem zelligen synthetischen Elastomer ausgebildet ist, wobei die Körner aus dem zelligen synthetischen Elastomer und die Korkkörner des Korkgranulats mittels zumindest eines Bindemittels miteinander verbunden sind.

In allen diesen Ausgestaltungsformen ist günstigerweise vorgesehen, dass die Korkkörner des Korkgranulats in der elastischen Schicht gleichmäßig verteilt angeordnet sind. Das Gleiche gilt günstigerweise, soweit vorhanden, auch für die Körner aus dem zelligen synthetischen Elastomer. Als Bindemittel zum Miteinanderverbinden der Korkkörner mit den Körnern aus dem zelligen synthetischen Elastomer kann z.B. ein Einkomponenten-Polyurethanbinder wie z.B. Isocyanat verwendet werden. Es kann sich, um ein weiteres Beispiel zu nennen, aber auch um Zweikomponenten-Polyurethanbinder oder andere Bindemittel oder Mischungen aus diesen Bindemitteln handeln. Alternativ ist es aber auch möglich, dass das Bindemittel selbst ein zelliges synthetisches Elastomer ist, in das dann Körner aus dem oder einem anderen zelligen synthetischen Elastomer und die Korkkörner eingebettet sind.

Bei dem Begriff des Korns ist darauf hinzuweisen, dass dieser Begriff zunächst als ein kleiner Einzelkörper eines Granulates zu verstehen ist. Man könnte das Korn auch als Flocke, Stückchen, Teilchen oder dergleichen bezeichnen. Der Begriff des Korns sagt noch nichts über seine Größe und Form aus. Bevorzugt weisen die Korkkörner des Korkgranulats eine Korngröße von 0,1 mm bis 10 mm, vorzugsweise von 0,5 mm bis 8 mm, auf. Die Körner aus dem zelligen synthetischen Elastomer weisen, soweit vorhanden, bevorzugt eine Korngröße von 1 mm bis 20 mm, vorzugsweise von 1 mm bis 12 mm auf. Unter einem Granulat wird im Sinne der Erfindung allgemein eine Substanz verstanden, welche sich aus einer Vielzahl von Körnern zusammensetzt. Es handelt sich dabei somit um eine Ansammlung einzelner Körner, welche durch geeignete Maßnahmen miteinander verbunden werden können. In diesem Sinne könnten also auch die Körner aus dem zelligen synthetischen Elastomer als zelliges synthetisches Elastomergranulat bezeichnet werden. Unabhängig von der konkreten Ausgestaltungsform weist das zellige synthetische Elastomer günstigerweise eine Porosität im Bereich von 10% bis 90%, vorzugsweise im Bereich von 30% bis 70%, auf. Die Dichte des zelligen synthetischen Elastomers liegt günstigerweise, wiederum unabhängig von der jeweiligen Ausgestaltungsform, im Bereich von 200 kg/m³ (Kilogramm pro Kubikmeter) bis 1.000 kg/m³, vorzugsweise im Bereich von 300 kg/m³ bis 800 kg/m³.

Besonders bevorzugt ist vorgesehen, dass das zellige synthetische Elastomer einen sogenannten Druckverformungsrest von höchstens 10% aufweist. Der Druckverformungsrest ist dabei ein Parameter, welcher beschreibt, wie weit sich das Elastomer nach einer Belastung wieder zurück in seine Ausgangsform zurückfindet, bzw. wie viel plastische Verformung nach Entlastung übrig bleibt. Der Druckverformungsrest kann gemäß DIN EN ISO 1856:2000+A1:2007 gemäß Verfahren B bestimmt werden.

Die Dicke der elastischen Schicht liegt günstigerweise im Bereich von 5mm (Millimeter) bis 20mm, besonders bevorzugt im Bereich von 5mm bis 15mm.

Zur Verbindung der Schwellensohle mit der Gleisschwelle weist die Schwellensohle günstigerweise auf der zur Verbindung mit der Gleisschwelle vorgesehenen Oberseite der Schwellensohle eine Verbindungsschicht auf. Es kann sich hierbei um an sich bekannte Wirrfaserschichten oder andere Schichten handeln, in die das Material, also insbesondere der Beton, einer Gleisschwelle beim Gießen der Gleisschwelle eindringen kann. Besonders bevorzugt handelt es sich bei der Verbindungsschicht erfindungsgemäßer Schwellensohlen um eine Flockschicht, wie sie an sich aus der EP 2 946 036 B1 bekannt ist.

An der in der Betriebsstellung zum Untergrund weisenden Basisseite der Schwellensohle weist die Schwellensohle bevorzugt eine Schutzschicht auf. Dies ist insbesondere dann günstig, wenn es sich bei dem Untergrund, auf dem die Schwellensohle zu liegen kommt, um ein Schotterbett handelt. Durch diese Schutzschicht kann einerseits der Querverschiebewiderstand verbessert und andererseits eine ungewünschte Zerstörung der Schwellensohle durch in sie eindringenden Schotter vermieden werden. Es handelt sich bevorzugt um eine textile Schutzschicht. Es können an sich bekannte Geotextilien eingesetzt werden. Bevorzugt handelt es sich bei der Schutzschicht um eine Vliesschicht. Die Dicke der Schutzschicht liegt günstigerweise zwischen 1mm und 5mm, besonders bevorzugt zwischen 1mm und 3mm.

Zusätzlich zur Schwellensohle an sich betrifft die Erfindung auch eine Anordnung mit einer Gleisschwelle und einer erfindungsgemäßen Schwellensohle, wobei die Schwellensohle an der den Schienen gegenüberliegenden Unterseite der Gleisschwelle befestigt ist. Vorzugsweise ist die Schwellensohle mit ihrer Verbindungsschicht in die Gleisschwelle eingegossen. Eine solche Anordnung könnte auch als ein Verbund aus einer Gleisschwelle und einer erfindungsgemäßen Schwellensohle bezeichnet werden. Die Gleisschwelle besteht vorzugsweise aus Beton oder weist zumindest eine Betonschicht auf. Alternativ kann die Gleisschwelle auch aus Holz, Kunststoff oder Stahl bestehen, wobei dann die Schwellensohle z.B. mittels Aufkleben an der Gleisschwelle befestigt werden kann. Das Aufkleben ist natürlich auch bei Gleisschwellen aus Beton möglich. Die Gleisschwelle könnte auch als Eisenbahnschwelle oder einfach nur als Schwelle bezeichnet werden. Es ist jedenfalls der Körper, der in der Regel quer bzw. orthogonal zu den Schienen verlegt ist und auf dem die Schienen befestigt sind.

Weitere Merkmale und Einzelheiten werden nachfolgend anhand der Figurenbeschreibung erläutert. Dabei zeigen:
Fig. 1 eine schematische Darstellung einer Gleisschwelle mit einer daran angeordneten Schwellensohle;
Fig. 2 einen Abschnitt der erfindungsgemäßen Schwellensohle an sich;
Fig. 3 eine Darstellung des Aufbaus einer ersten erfindungsgemäßen Ausführungsvariante einer elastischen Schicht der Schwellensohle und
Fig. 4 den Aufbau einer zweiten Ausführungsvariante einer elastischen Schicht einer erfindungsgemäßen Schwellensohle.

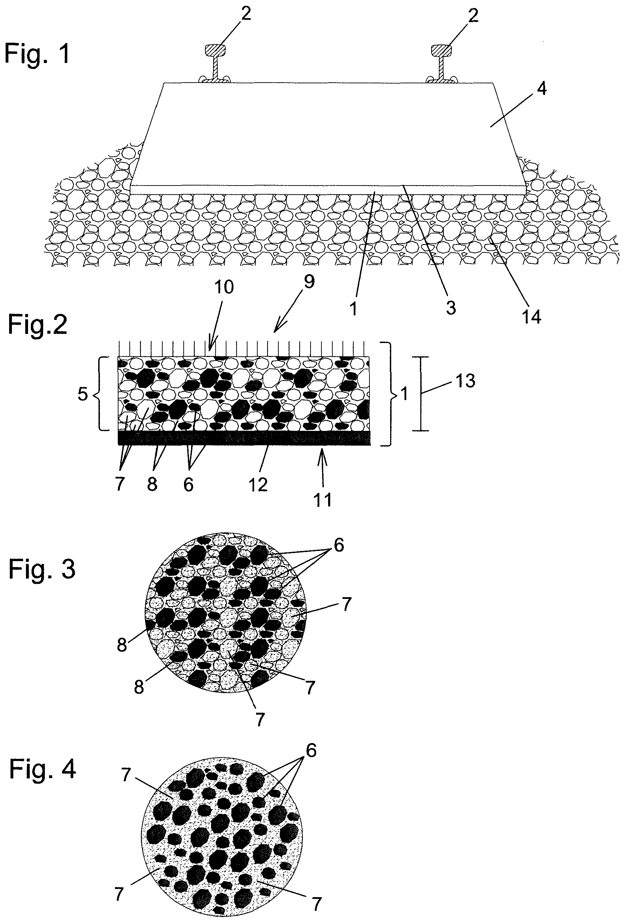

Fig. 1 zeigt eine an sich bekannte Anordnung einer Gleisschwelle 4 an deren, den Schienen 2 gegenüberliegenden, Unterseite 3 eine Schwellensohle 1 befestigt ist. Im gezeigten Ausführungsbeispiel gemäß Fig. 1 liegt die Gleisschwelle 4 unter Zwischenschaltung der Schwellensohle 1 auf einem Schotterbett 14 auf. Natürlich könnte die Schwellensohle 1 aber auch auf einem festen Untergrund, also auf einer sogenannten festen Fahrbahn wie z.B. einer Betonplatte oder dergleichen, aufliegen. Dies ist beim Stand der Technik an sich bekannt und muss nicht weiter erläutert werden.

Fig. 2 zeigt nun eine schematische Darstellung einer erfindungsgemäßen Schwellensohle 1, die, wie in Fig. 1 dargestellt, zur Anordnung an der Unterseite 3 der Gleisschwelle 4 vorgesehen ist. Das hier gezeigte Ausführungsbeispiel einer Schwellensohle 1 weist zusätzlich zur elastischen Schicht 5 eine Verbindungsschicht 10 und eine Schutzschicht 12 auf. Die Verbindungsschicht 10 befindet sich auf der zur Verbindung mit der Gleisschwelle 4 vorgesehenen Oberseite 9 der Schwellensohle 1. Wie eingangs bereits erläutert, handelt es sich bei der Verbindungsschicht 10 günstigerweise um eine Flockschicht, deren Fasern beim Gießen der bevorzugt aus Beton bestehenden Gleisschwelle 4 in den Körper der Gleisschwelle 4 eingegossen werden, wodurch eine innige Verbindung der Schwellensohle 1 mit der Gleisschwelle 4 sichergestellt werden kann. Natürlich sind auch andere beim Stand der Technik an sich bekannte Verbindungsschichten 10 auf der Oberseite 9 der Schwellensohle 1 denkbar. Auf der in der Betriebsstellung zum Untergrund, also gemäß Fig. 1 z.B. zum Schotterbett 14, weisenden Basisseite 11 bzw. Unterseite der Schwellensohle 1 befindet sich bei diesem Beispiel die, vorzugsweise textile, Schutzschicht 12. Besonders bevorzugt handelt es sich dabei um eine Geotextilschicht bzw. eine Vliesschicht. Diese erhöht einerseits den Querverschiebewiderstand, andererseits verhindert sie, dass der Schotter des Schotterbetts 14 zu tief in die Schwellensohle 1 eindringt bzw. diese beeinträchtigt.

Die elastische Schicht 5 der Schwellensohle 1 weist günstigerweise eine Dicke 13 mit den eingangs bereits genannten Werten auf. In der elastischen Schicht 5 sind sowohl Korkkörner 6 eines Korkgranulates als auch zelliges synthetisches Elastomer 7 vorhanden. Bevorzugt sind diese beiden Komponenten gleichmäßig verteilt in der elastischen Schicht 5 angeordnet.

Fig. 3 zeigt nun schematisiert und vergrößert eine erste Variante, bei der das zellige synthetische Elastomer 7 in der elastischen Schicht 5 als verteilt angeordnete Körner aus dem zelligen synthetischen Elastomer 7 ausgebildet ist, wobei die Körner aus dem zelligen synthetischen Elastomer 7 und die Korkkörner 6 des Korkgranulates mittels zumindest eines Bindemittels 8 miteinander verbunden sind. Als Bindemittel 8 kommen beispielsweise die eingangs bereits erwähnten Materialen in Frage. In Fig. 3 ist die elastische Schicht 5 somit aus einer Mischung von zwei Granulaten aufgebaut, wobei es sich bei dem einen Granulat um die hier als schwarze Körner dargestellten Korkkörner 6 des Korkgranulates handelt und das andere Granulat aus Körnern aus dem hier gepunktet dargestellten zelligen synthetischen Elastomer 7 gebildet wird. Die Punkte deuten die Porosität des zelligen synthetischen Elastomers 7 an.

Fig. 4 zeigt eine Variante, bei der die Korkkörner 6 des Korkgranulates in eine Matrix bzw. ein Grundgerüst eingebettet sind, wobei diese Matrix bzw. das Grundgerüst aus dem zelligen synthetischen Elastomer 7 der elastischen Schicht 5 gebildet ist. Die Korkkörner 6 des Korkgranulates sind räumlich verteilt in dieser Matrix angeordnet. Die Matrix bestehend aus dem zelligen synthetischen Elastomer 7 verbindet die Korkkörner 6 miteinander. Wie eingangs bereits erläutert, können auch Mischformen aus den Varianten gemäß Fig. 3 und Fig. 4 ausgebildet werden, um so erfindungsgemäße Schwellensohlen darzustellen. Bei dem Bindemittel 8 aus Fig. 3 könnte es sich also auch um ein zelliges synthetisches Elastomer handeln.

Zur Herstellung der elastischen Schicht 5 der Schwellensohle 1, wie sie in einem Ausschnitt in Fig. 3 gezeigt ist, sieht ein günstiges Verfahren vor, dass die Korkkörner 6 des Korkgranulats und die Körner aus dem zelligem synthetischen Elastomer 7 mit dem Bindemittel 8 gemischt werden und anschließend die so hergestellte Mischung, vorzugsweise unter Hinzufügung von Wärme, in einem Hohlkörper gepresst wird. Z. B. kann das Pressen der aus den genannten Komponenten sowie gegebenenfalls noch zusätzlich vorhandenen Füllstoffen bestehenden Mischung in einem Reaktionsbehälter wie z.B. einem Zylinder erfolgen. Es reicht dabei in der Regel ein Druck von wenigen bar, also z. B. 2 bis 3 bar Überdruck, aus. Die Temperatur sollte je nach Material, günstigerweise auf 70° bis 80° Celsius, eingestellt werden, wobei dies aber nicht zwingend notwendig ist. Das, z. B. in Form eines prepolymeren Isocyanats vorliegende, Bindemittel 8 reagiert dabei aus, so dass im Ergebnis ein Zylinder aus miteinander ausreichend fest verbundenen Korkkörnern 6 aus Korkgranulat und Körnern aus dem zelligem synthetischen Elastomer 7 hergestellt ist. Dieser kann dann mit an sich bekannten Verfahren geschält oder zugeschnitten werden, um die elastische Schicht 5 in der gewünschten Dicke herzustellen.

Fig. 4 dient, wie oben beschrieben, zur Visualisierung einer zweiten Gruppe von bevorzugten erfindungsgemäßen Ausführungsbeispielen. Bei diesen bildet das zellige synthetische Elastomer 7 eine Matrix, also ein Stoffgerüst, in das zumindest die Korkkörner 6 des Korkgranulats eingebettet sind. Auf ein zusätzliches Bindemittel 8 kann bei diesen Ausgestaltungsformen aufgrund der Einbettung der Körner bzw. Korkkörner 6 in die Matrix aus zelligem synthetischen Elastomer 7 verzichtet werden. Es ist dabei, wie oben bereits ausgeführt, aber auch denkbar, dass zusätzlich zu den Korkkörnern 6 des Korkgranulats auch Körner aus zelligem synthetischen Elastomer 7 in die Matrix aus zelligem synthetischen Elastomer 7 eingebettet sind.

Zur Herstellung von Ausführungsbeispielen, bei denen das zellige synthetische Elastomer 7 eine Matrix bildet, gibt es zwei verschiedene Gruppen von Verfahren. Bei der ersten werden die Korkkörner 6 des Korkgranulats, und gegebenenfalls auch die Körner aus zelligem synthetischen Elastomer 7, mit einer ersten Komponente des Matrixmaterials, z. B. im Falle eines Polyurethans einer Polyolkomponente oder einer Dyolkomponente oder einer anderen OH-gruppenhaltige Komponente, gemischt. Diese vorgefertigte Mischung wird dann durch Zugabe einer weiteren Komponente des Matrixmaterials, z.B. im Falle von Polyurethan von Isocyanat, zur Reaktion gebracht.

Die Form, in der diese Reaktion durchgeführt wird, kann bereits die endgültige Form der elastischen Schicht 5 der Schwellensohle 1 vorgeben. Es ist aber genauso gut möglich, einen größeren Körper herzustellen um die elastische Schicht 5 dann, z. B. durch Abschälen oder anderweitiges Zerschneiden, herzustellen.

Ein bevorzugtes zweites Verfahren zur Herstellung einer elastischen Schicht 5 der Schwellensohle 1, bei der eine Matrix aus zelligem synthetischen Elastomer zum Einbetten der Körner, insbesondere der Korkkörner 6, verwendet wird, sieht vor, dass die Korkkörner 6 des Korkgranulats, und gegebenenfalls auch die Körner aus zelligem synthetischen Elastomer 7, mit einem fertig gemischten Reaktionsgemisch des zelligen synthetischen Elastomers 7 gemischt werden und erst anschließend das Reaktionsgemisch zur Matrix aus zelligem synthetischen Elastomer 7 ausreagiert wird. Dies kann z. B. dann durch thermisches Aktivieren, vorzugsweise in dem weiter oben genannten Temperaturbereich zwischen 70° und 80°, erfolgen. Alternativ ist es auch möglich, ein entsprechend langsam reagierendes Reaktionsgemisch zu verwenden, so dass man genug Zeit hat, die genannten Körner unter zu mischen. Dies muss dann nicht zwangsläufig thermisch aktiviert werden. Auch bei diesem letztgenannten Verfahren ist es möglich, die Reaktion in einem Reaktionsbehälter durchzuführen, der bereits die Form der endgültigen elastischen Schicht 5 vorgibt. Alternativ ist es natürlich auch hier möglich, größere Körper in einem Stück zu produzieren, um dann durch Abschälen oder Zerschneiden die gewünschten Endprodukte herzustellen. Die gegebenenfalls vorgesehene Verbindungsschicht 10 und/oder die gegebenenfalls vorgesehene Schutzschicht 12 können durch an sich bekanntes Vorgehen in geeigneter Art und Weise nach oder während der Herstellung der elastischen Schicht 5 an dieser angebracht werden.

### Legende zu den Hinweisziffern:

- 1: Schwellensohle
- 2: Schiene
- 3: Unterseite
- 4: Gleisschwelle
- 5: elastische Schicht
- 6: Korkkorn
- 7: zelliges synthetisches Elastomer
- 8: Bindemittel
- 9: Oberseite
- 10: Verbindungsschicht
- 11: Basisseite
- 12: Schutzschicht
- 13: Dicke
- 14: Schotterbett

## Patentansprüche

1. Schwellensohle (1) zur Befestigung an einer den Schienen (2) gegenüberliegenden Unterseite (3) einer Gleisschwelle (4), wobei die Schwellensohle (1) zumindest eine elastische Schicht (5) mit darin verteilt angeordneten Korkkörnern (6) eines Korkgranulats aufweist, **dadurch gekennzeichnet, dass** die elastische Schicht (5) zusätzlich zumindest ein zelliges, also Gas- bzw. Lufteinschlüsse aufweisendes, synthetisches Elastomer (7) aufweist.

2. Schwellensohle (1) nach Anspruch 1, **dadurch gekennzeichnet, dass** das zellige synthetische Elastomer (7) in der elastischen Schicht (5) eine Matrix bildet, in die die verteilt angeordneten Korkkörner (6) des Korkgranulats eingebettet sind, wobei das zellige synthetische Elastomer (7) die Korkkörner (6) miteinander verbindet.

3. Schwellensohle (1) nach Anspruch 1 oder 2, **dadurch gekennzeichnet, dass** das zellige synthetische Elastomer (7) in der elastischen Schicht (5) als verteilt angeordnete Körner aus dem zelligen synthetischen Elastomer (7) ausgebildet ist, wobei die Körner aus dem zelligen synthetischen Elastomer (7) und die Korkkörner (6) des Korkgranulats mittels zumindest eines Bindemittels (8) miteinander verbunden sind.

4. Schwellensohle (1) nach einem der Ansprüche 1 bis 3, **dadurch gekennzeichnet, dass** das zellige synthetische Elastomer (7) eine Porosität im Bereich von 10% bis 90%, vorzugsweise von 30% bis 70%, aufweist.

5. Schwellensohle (1) nach einem der Ansprüche 1 bis 4, **dadurch gekennzeichnet, dass** das zellige synthetische Elastomer (7) eine Dichte im Bereich von 200 kg/m³ bis 1000 kg/m³, vorzugsweise von 300 kg/m³ bis 800 kg/m³, aufweist.

6. Schwellensohle (1) nach einem der Ansprüche 1 bis 5, **dadurch gekennzeichnet, dass** das zellige synthetische Elastomer (7) einen Druckverformungsrest von höchstens 10% aufweist.

7. Schwellensohle (1) nach einem der Ansprüche 1 bis 6, **dadurch gekennzeichnet, dass** das zellige synthetische Elastomer (7) als Feststoff des Elastomers Polyurethan und/oder Styrol-Butadien-Kautschuck und/oder EthylenVinylacetat-Copolymer und/oder Ethylen-Propylen-Dien-Kautschuck und/oder Chloropren-Kautschuck und/oder Silikon und/oder Polyisopren aufweist.

8. Schwellensohle (1) nach einem der Ansprüche 1 bis 7, **dadurch gekennzeichnet, dass** die Schwellensohle (1) auf der zur Verbindung mit der Gleisschwelle (4) vorgesehenen Oberseite (9) der Schwellensohle (1) eine Verbindungsschicht (10), vorzugsweise eine Flockschicht, aufweist und/oder dass die Schwellensohle (1) auf der in der Betriebsstellung zum Untergrund weisenden Basisseite (11) der Schwellensohle (1) eine, vorzugsweise textile, Schutzschicht (12), vorzugsweise eine Vliesschicht, aufweist.

9. Schwellensohle (1) nach einem der Ansprüche 1 bis 8, **dadurch gekennzeichnet, dass** die elastische Schicht (5) eine Dicke (13) im Bereich von 5 mm bis 20 mm, vorzugsweise im Bereich von 5 mm bis 15 mm, aufweist.

10. Anordnung mit einer Gleisschwelle (4) und einer Schwellensohle (1) nach einem der Ansprüche 1 bis 9, **dadurch gekennzeichnet, dass** die Schwellensohle (1) an der den Schienen (2) gegenüberliegenden Unterseite (3) der Gleisschwelle (4) befestigt, vorzugsweise mit der Verbindungsschicht (10) in die Gleisschwelle (4) eingegossen, ist.

## Claims

1. An under-sleeper pad (1) for fastening to an underside (3), on the opposite side from the rails (2), of a track sleeper (4), wherein the under-sleeper pad (1) has at least one elastic layer (5) with cork grains (6) of a cork granulate which are arranged in a distributed manner therein, **characterised in that** the elastic layer (5) additionally has at least one synthetic elastomer (7) which is cellular, i.e. has inclusions of gas or air.

2. An under-sleeper pad (1) according to claim 1, **characterised in that** the cellular synthetic elastomer (7) in the elastic layer (5) forms a matrix in which the cork grains (6) of the cork granulate which are arranged in a distributed manner are embedded, the cellular synthetic elastomer (7) connecting the cork grains (6) to each other.

3. An under-sleeper pad (1) according to claim 1 or 2, **characterised in that** the cellular synthetic elastomer (7) in the elastic layer (5) is formed as grains, arranged in a distributed manner, formed of the cellular synthetic elastomer (7), the grains formed of the cellular synthetic elastomer (7) and the cork grains (6) of the cork granulate being connected together by means of at least one binder (8).

4. An under-sleeper pad (1) according to one of claims 1 to 3, **characterised in that** the cellular synthetic elastomer (7) has a porosity in the range of 10% to 90%, preferably of 30% to 70%.

5. An under-sleeper pad (1) according to one of claims 1 to 4, **characterised in that** the cellular synthetic elastomer (7) has a density in the range of 200 kg/m³ to 1000 kg/m³, preferably of 300 kg/m³ to 800 kg/m³.

6. An under-sleeper pad (1) according to one of claims 1 to 5, **characterised in that** the cellular synthetic elastomer (7) has a compression set of at most 10%.

7. An under-sleeper pad (1) according to one of claims 1 to 6, **characterised in that** the cellular synthetic elastomer (7) has polyurethane and/or styrene/butadiene rubber and/or ethylene/vinyl acetate copolymer and/or ethylene/propylene/diene rubber and/or chloroprene rubber and/or silicone and/or polyisoprene as the solid matter of the elastomer.

8. An under-sleeper pad (1) according to one of claims 1 to 7, **characterised in that** the under-sleeper pad (1) has on the upper side (9) of the under-sleeper pad (1) intended for connecting to the track sleeper (4) a connecting layer (10), preferably a flock layer, and/or **in that** the under-sleeper pad (1), on the base side (11) of the under-sleeper pad (1) which in the operating position faces the subgrade, has a preferably textile protective layer (12), preferably a nonwoven layer.

9. An under-sleeper pad (1) according to one of claims 1 to 8, **characterised in that** the elastic layer (5) has a thickness (13) in the range of 5 mm to 20 mm, preferably in the range of 5 mm to 15 mm.

10. An arrangement with a track sleeper (4) and an under-sleeper pad (1) according to one of claims 1 to 9, **characterised in that** the under-sleeper pad (1) is fastened to the underside (3) of the track sleeper (4) on the opposite side from the rails (2), preferably is cast into the track sleeper (4) with the connecting layer (10).

## Revendications

1. Semelle de traverse (1) à fixer sur une face inférieure (3) d'une traverse de rail (4) opposée aux rails (2), la semelle de traverse (1) présentant au moins une couche élastique (5) dans laquelle sont répartis des grains de liège (6) d'un granulé de liège, **caractérisée en ce que** la couche élastique (5) présente en outre au moins un élastomère synthétique cellulaire (7), c'est-à-dire présentant des inclusions de gaz ou d'air.

2. Semelle de traverse (1) selon la revendication 1, **caractérisée en ce que** l'élastomère synthétique cellulaire (7) forme une matrice dans la couche élastique (5) matrice dans laquelle sont noyés les grains de liège (6) disposés de façon répartie du granulat de liège, l'élastomère synthétique cellulaire (7) reliant entre eux les grains de liège (6).

3. Semelle de traverse (1) selon la revendication 1 ou 2, **caractérisée en ce que** l'élastomère synthétique cellulaire (7) est conçu sous la forme de grains de l'élastomère synthétique cellulaire (7) répartis dans la couche élastique (5), les grains de l'élastomère synthétique cellulaire (7) et les grains de liège (6) du granulat de liège étant liés les uns aux autres au moyen d'au moins un liant (8).

4. Semelle de traverse (1) selon l'une des revendications 1 à 3, **caractérisée en ce que** l'élastomère synthétique cellulaire (7) présente une porosité comprise entre 10 % et 90 %, de préférence entre 30 % et 70 %.

5. Semelle de traverse (1) selon l'une des revendications 1 à 4, **caractérisée en ce que** l'élastomère synthétique cellulaire (7) a une densité comprise entre 200 kg/m³ et 1 000 kg/m³, de préférence entre 300 kg/m³ et 800 kg/m³.

6. Semelle de traverse (1) selon l'une des revendications 1 à 5, **caractérisée en ce que** l'élastomère synthétique cellulaire (7) présente une déformation rémanente à la compression d'au plus 10%.

7. Semelle de traverse (1) selon l'une des revendications 1 à 6, **caractérisée en ce que** l'élastomère synthétique cellulaire (7) comprend comme matériau solide de l'élastomère du polyuréthane et/ou du caoutchouc styrène-butadiène et/ou du copolymère éthylène-acétate de vinyle et/ou du caoutchouc éthylène-propylène-diène et/ou du caoutchouc chloroprène et/ou du silicone et/ou du polyisoprène.

8. Semelle de traverse (1) selon l'une des revendications 1 à 7, **caractérisée en ce que** la semelle de traverse (1) présente, sur la face supérieure (9) de la semelle de traverse (1) prévue pour la liaison avec la traverse de rail (4), une couche de liaison (10), de préférence une couche de flocage, et/ou **en ce que** la semelle de traverse (1) présente, sur le côté de base (11) de la semelle de traverse (1) tourné vers le sol en position de fonctionnement, une couche de protection (12), de préférence textile, de préférence une couche en non-tissée.

9. Semelle de traverse (1) selon l'une des revendications 1 à 8, **caractérisée en ce que** la couche élastique (5) présente une épaisseur (13) comprise entre 5 mm et 20 mm, de préférence comprise entre 5 mm et 15 mm.

10. Ensemble comprenant une traverse (4) et une semelle de traverse (1) selon l'une des revendications 1 à 9, **caractérisé en ce que** la semelle de traverse (1) est fixée sur la face inférieure (3) de la traverse (4) opposée aux rails (2), de préférence avec la couche de liaison (10) coulée dans la traverse (4).
